# EUROPEAN PATENT APPLICATION

(11) **EP 4 425 078 A1**
(43) Date of publication of application: **04.09.2024**
(21) Application number: 23020101.4
(22) Date of filing: 02.03.2023
(51) Int. Cl.: F25J 3/00

(54) **PROCESS AND APPARATUS FOR PURIFYING AIR AND CRYOGENIC AIR SEPARATION PROCESS AND PLANT**

(71) Applicant: Linde GmbH, 82049 Pullach (DE)
(72) Inventor: LOCHNER, Stefan, 82049 Pullach (DE); GOLUBEV, Dimitri, 82049 Pullach (DE); CELIK, Cem, 82049 Pullach (DE); VEMURI, Sesha, 82049 Pullach (DE)
(74) Representative: Imhof, Dietmar

(57) **Abstract**

The system of the invention is configured for producing compressed pure air. In such system, feed air (1) is introduced into an air compressor (2) comprising a next-to-last stage (2a) and a last stage (2b). Feed air from the next-to-last stage is cooled in an intermediate compressor cooler (3). Feed air cooled in the intermediate compressor cooler (3) is further compressed in the last stage (2b) and producing a compressed air stream (4). The compressed air stream (4) is led into a final compressor cooler (5) for producing a cooled compressed air stream (6, 6a, 6b). Such cooled compressed air stream (6, 6a, 6b) is introduced into a purification unit (8, 9) comprising an adsorber having an adsorbent for producing a compressed pure air stream (11). In the system the adsorber inlet temperature (AIT) is controlled by at least temporarily leading at least a portion of the compressed air stream through a bypass line (16) around the final compressor cooler (5) and thereby adjusting the portion of the compressed air stream which bypasses the final compressor cooler (5) and or by adjusting the duty of the final compressor cooler (5).

## Description

The invention relates to a process and an apparatus for purifying air, as well as a cryogenic air separation process and plant (ASU = air separation unit) using such purifying process and apparatus according to the introductory parts of the independent patent claims.

Upstream the cryogenic part of an ASU, components which would freeze out under cryogenic temperatures, in particular water and carbon dioxide, must be removed (see the teaching books of Häring, Industrial Gases Processing, 2008, page 24, section "Purification" and of Hausen, Linde, Tieftemperaturtechnik, 1985, section 4.4.2 "Adsorber für Wasserdampf und Kohlendioxid", pages 303 to 310). In modern ASUs, the respective purification step is usually performed in a pair of reversible vessels comprising one or more adsorbents. Those vessels are alternately in adsorption and regeneration operation, thereby allowing a stationary operation of the ASU. The purification step may additionally remove further impurities being present in the feed air as well, like hydrocarbons, nitrous oxides, carbon monoxide or hydrogen.

The object of the invention is to increase the performance of such systems, in particular in terms of removal performance and/or switching time of the adsorbers and/or amount of active material needed.

Such problem is solved by the features of claim 1.

Usually, the inlet temperature to the adsorber varies somewhat with ambient temperature changes. That has, however, not been seen as being critical parameter. The invention, however, discovered that the adsorber inlet temperature (AIT) and developed an efficient method to control the AlT. The AIT maybe directly measured at the adsorber inlet by any known temperature measurement method; alternatively it could be indirectly measured in the framework of the invention. Normally, all the feed air is cooled in all compressor coolers, including the final compressor cooler. That is sensible as the air later enters a cryogenic apparatus and the lower its temperature the better - for the cryogenic process as well as for the adsorption step. In deviation from that using thinking, in the invention an adjustable portion of the air bypasses the final compressor cooler in order to control the AlT.

That measure clearly increases the average AIT, leading to a thermodynamic disadvantage. In the invention, however, it was surprisingly discovered that there is a remarkable advantage in purification operation that strongly overweighs the expected disadvantage. In course of the invention, it is possible to maintain a stable feed inlet temperature into the prepurifier for an air separation plant so that its operation and removal performance is not impacted by the ambient temperature changes.

Although the feed inlet temperature is not exactly the same theoretical term as the adsorber inlet temperature - AIT, there is no practical difference between both temperatures because the feed air is neither cooled not heated between the prepurifier inlet (upstream switching valves) and the adsorber inlet (downstream first set of switching valves).

The invention establishes a stable and reliable operation. That eliminates the need for:
- unnecessary plant shutdown due to contaminant breakthrough,
- plant airflow reduction to eliminate breakthrough,
   increased liquid drain due to contaminant build-up in main condenser, which is no unnecessary refrigeration/power waste.
Elimination of each of these points provides economic advantage to the operation plant.

Such purification units comprising catalyst material are preferably regenerated by a hot regeneration gas - TSA (temperature swing adsorption). Alternatively, other operation type are possible as well like PSA (pressure swing adsorption), combination of PSA and TSA or other regeneration methods.

Although being useful in all types of adsorption purifications, in particular in TSA (temperature swing adsorption), it has particular advantages in PSA (pressure swing adsorption).

Classical prepurifiers in an air separation plant are typically designed for worst operating conditions. For a given design flow and pressure, the worst conditions coincide with the highest inlet temperature, typically happens during hot summer days. Hot inlet air brings highest moisture load, and at higher temperatures adsorbents in prepurifiers have lower capacity. Two effects combined leads to most challenging condition to the prepurifier, therefore the prepurifier beds are designed to operate successfully at the highest temperature they can be subjected.

Conversely, during typical cold winter days, the moisture load in the incoming air is low and adsorbents have higher capacity at these low temperatures, therefore one would expect the prepurifiers to operate in cold days without any issues with the design set out by the hot day conditions.

However, in particular in case of a pressure swing adsorption (PSA) prepurifier, where the regeneration gas is not heated, then colder ambient and colder feed inlet temperature to the prepurifier also means lower regeneration temperature, which leads to less effective bed clean up. Therefore, it is critical to maintain a relatively higher feed inlet temperature into the prepurifier during a cold day, so that beds are properly regenerated and successful prepurifier performance is achieved, as it is realized by the invention.

The solution of the invention is to maintain the feed inlet temperature into the prepurifier with a narrow design envelope, e.g. in a range of 15 to 40°C, preferably in a range of 30 to 40°C, while the ambient temperature can swing between, for example, 0 to 40°C range. This is achieved by adjusting the duty in the air compressor aftercooler (final compressor cooler) in such a way that it runs at a higher rate to achieve maximum cooling to the incoming air during hot days (e.g. 40°C), and runs at a reduced rate during cold days (e.g. 0°C) not to overcool the compressed air so that it does not go below 30°C. This can be achieved by controlling the duty of the aftercooler for the given temperature in the feed inlet by adjusting the bypass around the compressor aftercooler.

One further embodiment of this invention is to insulate the feed inlet line to the prepurifier to eliminate further cooling down the feed due to cold ambient temperatures.

In addition, if necessary, even to heat the feed inlet line so that the desired inlet temperature to prepurifier is achieved.

The cryogenic air separation process according to the invention comprises the process for producing compressed pure air as described above and, additionally, the steps of the cold portion of the ASU usually insulated by at least one coldbox. The purification of the invention may be combined with any known or unknown cryogenic ASU portion.

Furthermore, the invention relates to an apparatus for purifying air and apparatus for cryogenic air separation; both can be combined with apparatus features corresponding to the features of the dependent process claims.

The invention and further details of the invention are now described in terms of two embodiments shown in the drawings:
- Figure 1: shows a first embodiment incorporating a classical PSA unit having adsorbent(s) only as active material.
- Figure 2: related to a second embodiment, the purification unit containing at least one catalyst material.

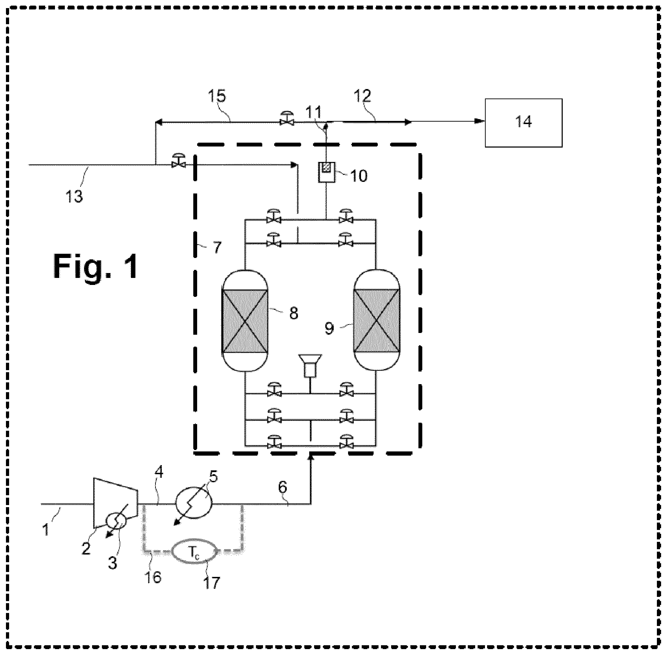

In Figure 1, atmospheric air is entering compressor 2 as feed air 1. The compressor comprises n compressor stages and n-1 intercoolers 3. In a particular example, n may be 4, i.e. it is a four-stage compressor with three intercoolers. At least a portion of the compressed air 4 is led at least temporarily into final cooler (aftercooler) 5 for cooling. The aftercooler 5 can use forced ambient air or cooling water as a cooling medium. The cooled compressed air stream 6 flows into a purification unit 7 comprising two vessels 8, 9 comprising one or more adsorbents and optionally catalysts in a known manner. (There could be a third or even more vessels in parallel.). This or those adsorbents mainly serve for removing water and carbon dioxide, hydrocarbons, nitrous oxide, carbon monoxide, hydrogen, etc from the air stream. They may comprise one more of the following materials:
Silica gel
Alumina
Molecular Sieve
Composite adsorbents of molecular sieve and alumina
Catalyst(s)

In the current operating state of the embodiment of Figure 1, vessel 9 is in the adsorption mode and vessel 8 is in the regeneration mode by receiving a regeneration gas, preferably a dry waste gas from the ASU the air is finally fed to, in particular a nitrogen-enriched or an oxygen-enriched stream. The regeneration gas has a considerably lower pressure than the feed air (PSA).

The purified air 11 is withdrawn from the purification unit 7 after an optional dust filter 10 and sent via line 12 to the main heat exchanger of the ASU (not shown in Figure 1). Optionally, a portion 15 of the purified air may be admixed to the regeneration gas 13.

According to the invention, the system comprises a bypass line 16 around the final cooler 5, such bypass line 16 comprising a temperature controller (Tc) 17 being able to control the AIT by adjusting the portion of the compressed air stream which bypasses the final compressor cooler.

Alternatively or additionally, the duty of aftercooler 5 is adjusted by the temperature control of the invention. If aftercooler duty such control is able to maintain the adsorber inlet temperature at the desired level, the bypass line 16 may not be used or even omitted.

In the course of the temperature control of the invention, the temperature measurement can be done by direct measuring the temperature to be controlled or indirectly, e.g. by a program using one or more other parameters like the ambient temperature and/or the temperature of the cooling water for the aftercooler 5.

In a practical example, the feed inlet temperature into the prepurifier (normally equal to the adsorber inlet temperature AIT) is maintained with a narrow design envelope, e.g. in a range of 30 to 40°C, while the ambient temperature can swing between, for example, 0 to 40°C range. This is achieved by adjusting the duty in the air compressor aftercooler (final compressor cooler) by the temperature controller 17 in such a way that it runs at a higher rate to achieve maximum cooling to the incoming air during hot days (e.g. 40°C), and runs at a reduced rate during cold days (e.g. 0°C) not to overcool the compressed air so that it does not go below 30°C. This can be achieved e.g. by controlling the duty of the aftercooler according to the temperature in the feed inlet line 6 and/or by adjusting the bypass around the compressor aftercooler.

By such control process using controller 17 for adjusting aftercooler duty and/or bypass line 16, the air flow into the prepurifier is maintained in a narrow acceptable design range. For instance, the aftercooler duty can be adjusted by running more/less flow of cooling media such cooling water or forced ambient air.

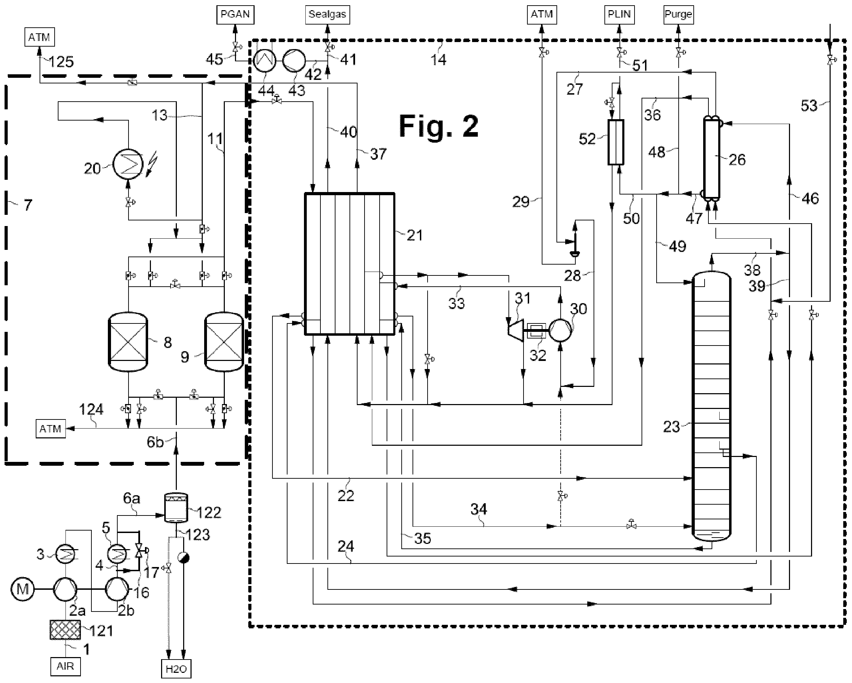

In Figure 2, the purification unit 7 and step upstream look quite similar to Figure 1. The steps in Figure 2 bearing three-digit reference numbers could be present in the process of Figure 1 respectively. In addition to Figure 1, it shows details of an ASU 14. Nevertheless, the purification unit 7 and the steps upstream in Figure 2 may be combined with any know or unknown type of ASU for compressing and purifying the ASU feed air.

The compressor in Figure 2 comprises just two stages 2a, 2b (n=2) with intermediate cooler 3. Atmospheric air (AIR) 1 flow through a filter 121 and is then compressed to a pressure of about 5 to 8 bara in line 4. (Other types of ASUs may have other air pressures, frequently in the range of 8 to 13 bara; the compressor then having normally 3 to 4 stages.) At least a portion of the compressed air 4 is led at least temporarily into a final cooler (aftercooler) 5 for cooling. The cooled compressed air steam 6a flows into a water separator 122 for separating liquid water 123 and is further guided through line 6b into a purification unit 7 comprising two vessels 8, 9 comprising one or more adsorbents like in Figure 1, although there is at least one additional active material in form of a catalyst. This difference will be described in detail below.

In the current operating state of the embodiment of Figure 2, vessel 9 is in the adsorption mode and vessel 8 is in the regeneration mode by receiving a regeneration gas, from the ASU 14 the air is finally fed to, in particular a nitrogen-enriched stream. It is operated by TSA. The regeneration gas is heated to a high temperature of 100 to 300°C, preferably 150 to 220°V before entering the vessel 8 to be regenerated.

The purified air 11 is withdrawn from the purification unit 7 and sent to the main heat exchanger 21 of the ASU 14. the cooled air is withdrawn slightly before the cold end of the main heat exchanger 21 and led in gaseous state into distillation column 23. In this embodiment, the main heat exchanger is an integrated heat exchanger combining the functions of a classical main heat exchanger and a classical subcooler. The distillation column 21 is a single column and the process is realized as a Spectra process incorporating recycling waste gas from the top condenser to the column by cold compression.

An intermediate fraction 24 is withdrawn in liquid form from the column 23 somewhat above the introduction of the feed air 22. It is cooled in the subcooler section of the MHE 21, expanded and evaporated in a first evaporation space of the top condenser 26 of the column 23. The evaporated intermediate fraction 27 is used as a recycling stream 28 fed to the inlet of a cold compressor 30. (A portion 29 of the evaporated bottom fraction 27 may be released to the atmosphere - ATM.)

The cold compressor 30 is driven by an expansion turbine 31, the combined machine also comprising a dissipative brake 32 for producing process refrigeration. The recompressed recycling stream 33 is cooled in the MHE 21. The cooled recycling stream 34 fed back to the column directly above its bottom.

The bottom liquid 35 of the column 23 is likewise cooled in the subcooler section of the MHE 21, expanded and then evaporated in a second evaporation space of the top condenser 26 of the column 23. The evaporated bottom fraction 36 is warmed in the MHE 21 to an intermediate temperature and then work-expanded in expansion turbine 31. The resulting low-pressure bottom fraction is completely warmed in the MHE 21 and then fed via line 37 to the purification unit 7 in order to be used at least in part as a regeneration gas.

A first portion 39 of the top nitrogen gas 38 from the column 23 is fully warmed in the MHE 21. A portion 41 of the warm gaseous nitrogen 40 may be used as seal gas 41 (Sealgas). Most 42 of it is recovered as pressurized gaseous nitrogen product (PGAN) 45 after being compressed in a product compressor 43 with aftercooler 44. The remainder 46 of the top gas 38 is nearly totally condensed in top condenser 26. From the effluent 47 of the condenser, incondensable gases are removed via purge stream 48, while the liquid nitrogen is split between the usage as reflux liquid 49 in the column 23 and the withdrawal as liquid product (PLIN) via lines 50, 51 after subcooling in product subcooler 52.

In case, refrigeration may be added by LIN injection via line 53.

According to the invention, the system may comprise a bypass line 16 around the final cooler 5, such bypass line 16 comprising a temperature controller 17 (shown here in a simplified way as a controllable valve) being able to control the AIT by adjusting the portion of the compressed air stream which bypasses the final compressor cooler. Alternatively or additionally, the duty of the cooler 5 is adjusted.

This can be done by measuring the temperature to be controlled or by an indirect measurement as lined out above. By such control process using controller 17 and bypass line 16, the air flow into the prepurifier is maintained in a narrow acceptable design range.

Such stable temperature is even more advantageous, if, as in the embodiment of Figure at least one layer of catalyst material is contained in the vessels above the adsorbent layer known from Figure 1 or any classical purification unit. Such adsorption vessels including catalyst are known in the art, e.g. from EP 799633 A1, EP 2662653 A1 or WO 2022039840 A1 disclosing specific layering applicable in the invention. Those catalysts serve for removing hydrogen and carbon monoxide to ppb levels in order to produce ultrapure nitrogen in the ASU 14. In an embodiment of the respective variant of the invention, the vessels 8, 9 comprise one or more layers first layer of manganese oxide and copper oxide containing catalyst (sometimes called "hopcalite") configured to remove at least some of the carbon monoxide and hydrogen from the feed air.

The efficiency of all of those catalyst materials, in particular of hopcalite, decreases significantly with lower temperatures. In previous known design, the AIT is directly related to the cooling water temperature. The cooling water temperature effects the power consumption of the ASU directly. The lower the temperature the lower the power consumption of the plant. With the previous design, the inlet temperature of the adsorber is directly related to ambient temperatures. In case such an ASU is operated in the northern hemisphere, the inlet temperature during winter season can be too low for an efficient catalyst design.

By the way to operate the precooling system according to the invention, inlet temperatures of the purification unit can be adapted to the values required for efficiently operating the catalyst in the adsorber vessel. The bypass around the final cooler allows to mix warm gas upstream the aftercooler with cold gas downstream with cooled gas to increase the inlet temperature to the purification unit during periods with low cooling water temperatures.

Operating such a system e.g. in Germany means cooling water temperatures of 5°C up to max. 28°C or even higher. Increasing cooling water temperature in winter by 3K , which could be an alternative to the bypass of the invention for increasing AIT, would, however, reduce the power consumption of the compressor by approx. 1 %. Such power loss can be avoided by the invention.

## Claims

1. Process for producing compressed pure air comprising the following steps:
- introducing feed air (1) into an air compressor (2) comprising a next-to-last stage (2a) and a last stage (2b),
- cooling feed air from the next-to-last stage in an intermediate compressor cooler (3),
- further compressing feed air cooled in the intermediate compressor cooler (3) in the last stage (2b) and producing a compressed air stream (4),
- at least temporarily leading at least a portion of the compressed air stream (4) into a final compressor cooler (5) and producing a cooled compressed air stream (6, 6a, 6b),
- introducing the cooled compressed air stream (6, 6a, 6b) into a purification unit (8, 9) comprising an adsorber having an adsorbent for producing a compressed pure air stream (11), in particular by removing water and/or carbon dioxide from the cooled compressed air stream (6, 6a, 6b),
**characterized by**
- controlling the adsorber inlet temperature (AIT)
- by at least temporarily leading at least a portion of the compressed air stream through a bypass line (16) around the final compressor cooler (5) and thereby adjusting the portion of the compressed air stream which bypasses the final compressor cooler (5) and or
- by adjusting the duty of the final compressor cooler (5).

2. Process according to claim 1, the purification unit (8, 9) further comprising a catalyst for removing carbon monoxide and/or hydrogen from the cooled compressed air stream, said temperature control improving the efficiency of such catalyst.

3. Process according to claim 1 or 2, the purification unit (8, 9) being operated by pressure swing.

4. Process according to any of the preceding claims, guiding at least a portion of the compressed air stream (4) on at least a part of its way to the purification unit (8, 9) in a thermally insulated pipeline.

5. Process according to any of the preceding claims, heating at least a portion of the compressed air stream (4) on its way to the purification unit (8, 9) by a heating unit.

6. Process according to any of the preceding claims, comprising removing in the purification unit (8, 9) other contaminants like hydrocarbons, nitrous oxide, carbon monoxide and or hydrogen besides water and/or carbon dioxide from the cooled compressed air stream.

7. Cryogenic air separation process for producing a nitrogen enriched stream and an oxygen enriched stream by cryogenic air separation,
- producing compressed pure air (11, 12) by the process of any of the preceding claims,
- cooling the compressed pure air (11, 12) in a main heat exchanger (21) to produce cryogenic air (22),
- introducing at least a portion of the cryogenic air (22) into a distillation column system (23),
- withdrawing nitrogen enriched and an oxygen enriched streams (38, 39, 40; 35, 36, 37) from the distillation system (23) and
- warming at least a portion of the nitrogen enriched and an oxygen enriched streams in the main heat exchanger (21).

8. Process according to claim 7, the nitrogen enriched stream (38, 39, 40) being an ultrapure nitrogen stream.

9. Process according to any of the preceding claims, the purification unit (8, 9) comprising, in addition to the adsorbent, a catalyst material for removing hydrogen and/or carbon monoxide.

10. Process according to claim 9, the catalyst material comprising manganese oxide and copper oxide.

11. Apparatus for purifying air for producing compressed pure air comprising
- an air compressor (2) comprising a next-to-last stage (2a) and a last stage (2b),
- a purification unit (8, 9), adsorber having an adsorbent for producing a compressed pure air stream (11), in particular by removing water and/or carbon dioxide from a cooled compressed air stream (6, 6a, 6b)
- a first line (1) for introducing feed air into an air compressor (2) ,
- an intermediate compressor cooler (3) for cooling feed air from the next-to-last stage,
- a second line for introducing feed air cooled in the intermediate compressor cooler (3) to the last stage (2b) and a third line for withdrawing a compressed air stream (4) from the last stage (2b),
- a fourth line for leading at least a portion of the compressed air stream (4) into a final compressor cooler (5) and a sixth line for withdrawing the cooled compressed air stream (6, 6a, 6b) from the final compressor cooler (5),
- a seventh line for introducing the cooled compressed air stream (6, 6a, 6b) into the purification unit (8, 9),
**characterized by**
- control means capable of controlling the adsorber inlet temperature
- by at least temporarily leading at least a portion of the compressed air stream through a bypass line (16) around the final compressor cooler (5) and adjusting the portion of the compressed air stream which bypasses the final compressor cooler (5) and or
- by adjusting the duty of the final compressor cooler (5).

12. Apparatus according to claim 11, the purification unit (8, 9) further comprising a catalyst for removing carbon monoxide and/or hydrogen from the cooled compressed air stream, the catalyst comprising in particular manganese oxide and copper oxide.

13. Apparatus according to claim 11 or 12, the purification unit (8, 9) being arranged to be operated by pressure swing.

14. Apparatus according to any of claims 11 to 13, at one, at least a part of the seventh line being equipped with thermal insulation.

15. Cryogenic air separation unit for producing a nitrogen enriched stream and an oxygen enriched stream by cryogenic air separation comprising
- an apparatus for purifying air (8, 9) according to claims 11 to 14 for producing compressed pure air,
- a distillation column system (23),
- a main heat exchanger (21),
- an eighth line for introducing the compressed pure air (11, 12) into the main heat exchanger (21) for cooling the compressed pure air to produce cryogenic air (22),
- a nineth line for introducing at least a portion of the cryogenic air (22) into the distillation system (23),
- a tenth line for withdrawing a nitrogen enriched stream (38, 39) from the distillation system and for introducing at least a portion of the nitrogen enriched stream into the main heat exchanger (21) and
- an eleventh line for withdrawing an oxygen enriched stream (35, 36) from the distillation system (23) and for introducing at least a portion of the oxygen enriched stream into the main heat exchanger (21).
